Europäisches Patentamt

European Patent Office

Office européen des brevets

(19)

(11) Veröffentlichungsnummer : **0 166 282**
**B1**

(12) **EUROPÄISCHE PATENTSCHRIFT**

(45) Veröffentlichungstag der Patentschrift :
30.11.88

(21) Anmeldenummer : 85107052.4

(22) Anmeldetag : 07.06.85

(51) Int. Cl.⁴ : **B 01 J 39/04**, B 01 J 41/04,
B 01 J 49/00

(54) Verfahren und Vorrichtung zur Behandlung von Flüssigkeiten mit Kationenaustauschern und Anionenaustauschern.

(30) Priorität : 20.06.84 DE 3422860

(43) Veröffentlichungstag der Anmeldung :
02.01.86 Patentblatt 86/01

(45) Bekanntmachung des Hinweises auf die Patenterteilung : 30.11.88 Patentblatt 88/48

(84) Benannte Vertragsstaaten :
AT BE DE FR GB IT NL

(56) Entgegenhaltungen :
DE-A- 1 642 848
DE-A- 2 936 999
GB-A- 2 063 094
US-A- 3 497 069
CHEMICAL ABSTRACTS, Band 79, Nr. 2, 16. Juli 1973,
Seite 127, Zusammenfassung Nr. 7237x, Columbus,
Ohio, US

(73) Patentinhaber : BAYER AG
Konzernverwaltung RP Patentabteilung
D-5090 Leverkusen 1 Bayerwerk (DE)

(72) Erfinder : Martinola, Friedrich, Dr.
Leopold-Gmelin-Strasse 16
D-5000 Köln 80 (DE)

## Beschreibung

Die Erfindung betrifft ein neues Verfahren zur Behandlung von Flüssigkeiten mit Kationenaustauschern und Anionenaustauschern und eine neue Vorrichtung zur Durchführung des Verfahrens.

Verfahren zur Behandlung von Flüssigkeiten, insbesondere zur Entsalzung von Wasser oder wäßrigen Lösungen, z. B. Zucker- oder Glycerinlösungen, sind bekannt. Für die Entsalzung werden Kombinationen von stark sauren Kationenaustauschern mit stark- oder schwachbasischen Anionenaustauschern verwendet. Die verschiedenen bekannten Verfahren unterscheiden sich in der Weise, wie die verschiedenen Ionenaustauscher-Typen, Kationenaustauscher und Anionenaustauscher, angeordnet sind.

In Mischbettfiltern liegen Kationenaustauscher und Anionenaustauscher während der Arbeitsphase in Form einer innigen Mischung vor. Für die Regeneration wird die erschöpfte Harzmasse hydraulisch aufgrund der unterschiedlichen spezifischen Gewichte von Kationenaustauscher und Anionenaustauscher in die beiden Komponenten aufgetrennt. Jede der beiden Schichten wird für sich getrennt regeneriert und ausgewaschen. Mischbettfilter haben den schwerwiegenden Nachteil, daß sich die erschöpfte Harzmasse nicht vollständig in Kationenaustauscher und Anionenaustauscher auftrennen läßt, sondern daß der eine Ionenaustauschertyp immer noch gewisse Mengen des anderen Ionenaustauscher-Typs enthält. Die Regenerierung von Kationenaustauscher und Anionenaustauscher führt deshalb stets zu einer gewissen Menge an fehlbeladenem Kationen- und Anionenaustauscher. Folgen dieser Fehlbeladung sind unbefriedigende Qualität der behandelten Flüssigkeit und unverhältnismäßig niedrige nutzbare Kapazitäten der Mischbettfilter.

Zu der durch unvollständige Auftrennung verursachten Fehlbeladung von Kationen- und Anionenaustauscher kommt bei Mischbettfiltern mit interner Regenerierung die unvermeidbare Fehlbeladung der in der Nähe der Grenzfläche Kationenaustauscher/Anionenaustauscher befindlichen Ionenaustauscher durch Eindringen des Regeneriermittels für die eine Komponente in die Schicht der anderen Komponente. Durch die Verwendung von Trennschicht-Harzen, wie sie z. B. in der DE-PS 971 771 und der US-PS 2 666 741 empfohlen wird, läßt sich zwar die Fehlbeladung durch Eindringen des Regeneriermittels der einen Komponente in die Schicht der Gegenkomponente verhindern, nicht aber die Fehlbeladung infolge unvollständiger Klassierung in Kationenaustaucher und Anionenaustauscher. Die Verwendung der Trennschicht-Harze ist daher auch nur von begrenztem Wert.

Sehr häufig werden Kationen- und Anionenaustauscher auch in getrennten Filtern oder aber in getrennten, aneinandergrenzenden Kammern eines Filters untergebracht (siehe z. B. DE-OS 21 37 796, die US-PS 3 136 719 und 3 719 591 oder die EP-A 1-0050813). Der Nachteil dieser Anordnungen ist der hohe apparative Aufwand und — wenn die Ionenaustauscher in getrennten Kammern eines Filters vorliegen — der hohe Druckverlust, der durch die die Kammern gegeneinander abgrenzenden Düsenböden und die erforderlichen Vorrichtungen zur Flüssigkeitsverteilung innerhalb der Kammern verursacht wird.

In der DE-OS 16 42 848 und der japanischen bekanntgemachten Anmeldung JA-B-80/015259 sind Gegenstromverfahren zur Wasserentsalzung beschrieben, bei denen Kationen- und Anionenaustauscher in einem Filter in getrennten, unmittelbar aneinander grenzenden, übereinander liegenden Schichten angeordnet sind. Der Kationenaustauscher bildet wegen seines, verglichen mit dem spezifischen Gewicht des Anionenaustauschers, höheren spezifischen Gewichts die untere Schicht, der Anionenaustauscher die obere Schicht. Beide Harzschichten werden bei der Beladung nacheinander durchströmt. Die Strömungsrichtung bei der Regeneration ist der Strömungsrichtung bei der Beladung entgegengesetzt. Einer Durchmischung der beiden Harzschichten bei der im Aufwärtsstrom erfolgenden Beladung wird durch übliche Maßnahmen, z. B. einer auf die Oberfläche der Anionenaustauscherschicht gerichteten Hilfsströmung oder durch vollständige Füllung des Filters mit Ionenaustauschern, entgegengewirkt. Beide Verfahren unterscheiden sich in der Durchführung der Regenerierung. Gemäß JA-B-80/015529 werden Anionen- und Kationenaustauscher zunächst von oben nach unten von $H_2SO_4$ durchströmt. Der auf diese Weise in die Sulfat-Form überführte Anionenaustauscher wird in einem zweiten Regenerierschritt durch Behandeln mit NaOH in die OH-Form überführt, wobei zwischen der im Anionenaustauscher untergebrachten Mitteldrainage und dem Kationenaustauscher eine Schicht aus Anionenaustauscher in der Sulfat-Form verbleibt. Gemäß DE-OS werden dagegen der Anionenaustauscher und Kationenaustauscher getrennt regeneriert, wobei die verbrauchte Regenerierlauge an der Mitteldrainage abgezogen und, zeitlich versetzt, die Regeneriersäure an der Mitteldrainage eingeführt wird.

Ein schwerwiegenden Nachteil beider Verfahren ist, daß bei ihrer Durchführung Fehlbeladungen der Ionenaustauscher und infolgedessen auch die Folgen der Fehlbeladung — unzureichende Qualität des behandelten Wassers, niedrige nutzbare Kapazität des Filters — unvermeidbar sind. Infolge der durch den Verfahrenstyp vorgegebenen Lage der Mitteldrainage in der Nähe der Grenzfläche Kationenaustauscher/Anionenaustauscher ist, insbesondere beim Verfahren gemäß DE-OS 16 42 848, eine gegenseitige Verunreinigung des einen Ionenaustauschers durch das Regeneriermittel der Gegenkomponente unvermeidlich. Außerdem führt die bei der Inbetriebnahme des Filters und infolge der Volumenänderung der Ionenaustauscher beim Beladen und Regenerieren unvermeidbare Auf- und Abbewegung der Ionenaustauscher-Masse im Filter zu einer Vermischung von Kationenaustauscher und Anionenaustauscher im Grenzflächenbereich der beiden Austauscher.

Darüberhinaus hat das in der DE-OS 16 42 848 beschriebene Verfahren den Nachteil, daß es für seine Durchführung ein kompliziertes Filter erfordert, nämlich ein aus zwei zylindrischen Abschnitten verschiedener Durchmesser bestehendes Filter, das mit Vorrichtungen ausgerüstet ist, die eine Umlagerung beim Durchströmen der Austauschermasse im Aufstrom verhindern. Das in der JA-B-80/015259 beschriebene Verfahren hat als speziellen Nachteil den außerordentlich hohen Regeneriermittel-Verbrauch. Bei der Säurebehandlung der Ionenaustauscher im ersten Regenerierschritt wird der Anionenaustauscher vollständig mit $SO_4^{--}$-Ionen beladen. Diese $SO_4^{--}$-Ionen müssen durch die anschließende Behandlung mit Alkali wieder verdrängt werden.

Es wurde nun gefunden, daß man zu einem wesentlich einfacheren aber trotzdem wirksameren Verfahren zur Behandlung von Flüssigkeiten mit Kationenaustauschern und Anionenaustauschern gelangt, das die Nachteile der bekannten Verfahren nicht aufweist, wenn man Kationen und Anionenaustauscher in getrennten Schichten übereinander, den Kationenaustauscher als untere Schicht, den Anionenaustauscher als obere Schicht, in einem für Gegenstrom-Verfahren mit Aufstrom-Beladung üblichen Ionenaustausch-Filter anordnet, beide Ionenaustauscher durch eine inerte, am Ionenaustausch nicht teilnehmende Harzschicht einer bestimmten Höhe voneinander trennt, den Anionenaustauscher zum Regenerieren aus dem Filter entfernt, und dies ohne Kationenaustauscher und Trennschicht zu verwirbeln, den im Filter verbliebenen Kationenaustauscher im Gegenstrom und den aus dem Filter entfernten Anionenaustauscher, in üblicher Weise extern, d. h. in einem gesonderten Gefäß regeneriert und den regenerierten Anionenaustauscher für die Beladungsphase wieder in das Arbeitsfilter zurückfördert, wiederum ohne Kationenaustauscher und Trennschicht zu verwirbeln.

Die Erfindung betrifft daher ein Verfahren zur Behandlung von Flüssigkeiten in Ionenaustauschfiltern, die Kationenaustauscher und Anionenaustauscher in getrennten, übereinander angeordneten Schichten, den Kationenaustauscher als untere Schicht, den Anionenaustauscher als obere Schicht, enthalten und bei dem die Beladung der Ionenaustauscher im aufwärtsgerichteten Flüssigkeitsstrom erfolgt und die erschöpften Ionenaustauscher getrennt regeneriert und ausgewaschen werden, das dadurch gekennzeichnet ist, daß

a) Kationenaustauscher und Anionenaustauscher durch eine am Ionenaustausch nicht teilnehmende Schicht aus üblichen Trennschicht-Harzen oder aus dem im Verfahren verwendeten Anionenaustauscher in beladener Form voneinander getrennt sind und die Höhe dieser Schicht mindestens 30 mm größer ist als die Höhe des Freiraums im Filter zu Beginn des Beladungsvorgangs und mindestens 100 mm beträgt ;

b) nach beendeter Aufstrombeladung der Anionenaustauscher, ohne Trennschicht und Kationenaustauscher zu verwirbeln, aus dem Filter entfernt und in bekannter Weise in einem gesonderten Behälter extern regeneriert und ausgewaschen wird und der im Filter verbleibende, von der Trennschicht bedeckte Kationenaustauscher in bekannter Weise im Gegenstrom regeneriert und ausgewaschen wird ;

c) anschließend an die Regenerierung von Kationen- und Anionenaustauscher der Anionenaustauscher in das Filter zurückgefördert und die Anionenaustauscher-Schicht erneut aufgebaut wird, ohne Trennschicht und Kationenaustauscherschicht zu verwirbeln.

Das erfindungsgemäße Verfahren ist zwar nur in Bezug auf den Kationenaustauscher ein Gegenstromverfahren, in Bezug auf den Anionenaustauscher dagegen ein Ionenaustauschverfahren mit externer Regenerierung. Trotzdem wurde gefunden, daß mit der beanspruchten Harzschicht-Folge : Gegenstrom-regenerierter Kationenaustauscher/Trennschicht bestimmter Höhe/extern regenerierter Anionenaustauscher, eine Flüssigkeits-Qualität erreicht wird, wie sie an sich nur reine Gegenstrom-Verfahren liefern, d. h. Verfahren, in denen Kationenaustauscher und Anionenaustauscher im Gegenstrom regeneriert werden. Außerdem weist das erfindungsgemäße Verfahren für die Regenerierung des Kationenaustauschers den für Gegenstrom-Verfahren charakteristischen niedrigen Regeneriermittel-Bedarf auf.

Das erfindungsgemäße Verfahren vereint die Vorteile der Gegenstrom-Verfahren, bei denen Kationen- und Anionenaustauscher in getrennten Filtern oder Kammern untergebracht sind, nämlich hohe Qualität der behandelten Flüssigkeit und geringer Regeneriermittel-Bedarf, mit den Vorteilen der Ionenaustausch-Verfahren, bei denen Kationen- und Anionenaustauscher in getrennten, übereinander angeordneten Schichten in einem Filter untergebracht sind und in diesen mit den verschiedenen Regeneriermitteln regeneriert werden, nämlich Einfachheit und Wirtschaftlichkeit, ohne daß es die Nachteile dieser Verfahren aufweist, nämlich hohen apparativen Aufwand, unbefriedigende Qualität der behandelten Flüssigkeit, niedrige nutzbare Kapazität der Filter und hoher Regeneriermittel-Bedarf.

Da das erfindungsgemäße Verfahren ohne Mitteldrainage arbeitet, läßt sich in ihm das Mengenverhältnis von Kationenaustauscher zu Anionenaustauscher beliebig ändern ; infolgedessen weist das Verfahren gegenüber den in der DE-OS 16 42 848 und der JA-B-80/015259 beschriebenen Verfahren den weiteren Vorteil auf, daß es sich der Zusammensetzung der zu behandelnden Flüssigkeit sehr viel leichter anpassen läßt. Außerdem erfordert es auch keine zusätzlichen Gefäße für das Rückspülen von Kationen- und Anionenaustauscher. Das für die externe Regeneration des Anionenaustauschers erforderliche Gefäß kann unmittelbar auch zum Rückspülen des Anionenaustauschers verwendet werden ; der Kationenaustauscher wird im Arbeitsfilter selbst rückgespült.

Als am Ionenaustausch nicht teilnehmende, Kationenaustauscher und Anionenaustauscher voneinander trennende Harzschicht wird bevorzugt der im Verfahren verwendete, beladene Anionenaustauscher verwendet ; dies bietet den Vorteil, daß a) kein Drittharz benötigt wird, b) daß sich infolge des größeren Unterschiedes im spezifischen Gewicht von Kationenaustauscher/Anionenaustauscher als im spezifischen Gewicht von Kationenaustauscher/Trennschichtharz und Trennschichtharz/Anionenaustauscher, eine schärfere Trennschicht zwischen Kationenaustauscher und Anionenaustauscher ausbildet als zwischen Kationenaustauscher/Trennschichtharz und Trennschichtharz/Anionenaustauscher und c) daß die Höhe der Trennschicht zwischen den einzelnen Arbeitscyclen besonders einfach einstellbar ist, indem man eine größere oder kleinere Menge des beladenen Anionenaustauschers zur externen Regeneration aus dem Filter fördert.

Bei den in Mischbetten als Trennschichtharz verwendeten Harzen handelt es sich im allgemeinen um Perl(co)polymerisate von Styrol, Vinylchlorid, Methacrylsäureestern, Divinylbenzol und Acrylnitril ferner um Acrylnitril-Butadien-Styrol-Harze, Epoxid-harze, Polyamidharze und Polystyrol-harze (siehe EP-A 2-0010265, Spalte 1).

Damit sich bei der Verwendung von Trennschichtharzen scharfe Trennschichten zwischen Kationenaustauscher und Trennschichtharz einerseits und Trennschichtharz/Anionenaustauscher andererseits ausbilden, sollte das Trennschichtharz bezüglich Korngröße und spezifischem Gewicht bestimmte Bedingungen erfüllen : das Trennschichtharz sollte in etwa die gleichen Korngrößen aufweisen wie die feinste Siebfraktion des Kationenaustauschers. Das spezifische Gewicht der Trennschicht-Harze sollte um mindestens 0,02 g/ml, vorzugsweise mindestens 0,04 g/ml, besonders bevorzugt mindestens 0,05 g/ml niedriger als das des Kationenaustauschers und um mindestens 0,02 g/ml, vorzugsweise mindestens 0,04 g/ml, besonders bevorzugt mindestens 0,05 g/ml höher als das des Anionenaustauschers sein.

Unter feinster Siebfraktion des Kationenaustauschers ist im Rahmen des erfindungsgemäßen Verfahrens die Fraktion des Kationenaustauschers zu verstehen, die bei der Klassierung des Kationenaustauschers in drei verschiedene Korngrößenbereiche als feinster Korngrößenbereich anfällt.

Für die Wirksamkeit des erfindungsgemäßen Verfahrens ist die Höhe der am Ionenaustausch nicht teilnehmenden, Kationen- und Anionenaustauscher voneinander trennenden Harzschicht (im folgenden abgekürzt als « Trennschicht » bezeichnet) von entscheidender Bedeutung ; um eine Vermischung von Kationenaustauscher und Anionenaustauscher zuverlässig zu vermeiden, ist die Trennschicht mindestens 30 mm, vorzugsweise 30 bis 90 mm größer als die Höhe des Freiraumes im Filter zu Beginn des Beladungsvorganges und mindestens 100 mm hoch.

Als Freiraum eines Ionenaustausch-Filters ist im Rahmen der vorliegenden Erfindung der nicht mit Ionenaustauscher gefüllte Raum der Filterkammer zu verstehen ; infolge der Volumenänderung (Quellung und Schrumpfung) der Ionenaustauscher bei Beladung und Regeneration kann der Freiraum im Laufe eines Arbeitszyklus sowohl ab- als auch zunehmen.

Als Kationenaustauscher werden im erfindungsgemäßen Verfahren die üblichen stark sauren Kationenaustauscher auf Basis von mit Divinylbenzol vernetzten Polystyrolsulfonsäuren verwendet. Die Korngröße des Kationenaustauschers sollte über 0,3 mm, vorteilhaft über 0,4 mm vorzugsweise über 0,45 mm liegen und sein spezifisches Gewicht mindestens 0,05 g/ml vorzugsweise mindestens 0,07 g/ml größer sein als das spezifische Gewicht des Anionenaustauschers.

Als Anionenaustauscher werden in dem erfindungsgemäßen Verfahren die üblichen stark- und schwachbasischen Anionenaustauscher auf Basis von mit Divinylbenzol vernetzten Polyvinylbenzylaminen oder vernetzten N-alkylierten Poly(meth)acrylamiden verwendet. Die Korngröße des Anionenaustauschers sollte unter 1,20 mm, vorteilhaft unter 1,10 mm, vorzugsweise unter 1,05 mm liegen.

Das erfindungsgemäße Entfernen des Anionenaustauschers aus dem Arbeitsfilter, ohne Trennschicht und Kationenaustauscher zu verwirbeln, läßt sich besonders einfach durch hydraulische Förderung bewerkstelligen. Die hydraulische Förderung des Anionenaustauschers aus dem Arbeitsfilter läßt sich z. B. durch Abziehen der Anionenaustauscherschicht mittels eines (oder mehrerer) bis an die Grenzfläche Anionenaustauscher/Trennschicht hinabreichenden Hebers (bzw. hinabreichender Heber) oder mit einem (oder mehreren) senkrecht bis an die Grenzfläche Anionenaustauscher/Trennschicht in den Anionenaustauscher eingeführten Steigrohrs (bzw. eingeführter Steigrohre) bewerkstelligen. Die Rückführung des extern regenerierten und ausgewaschenen Anionenaustauschers in das Arbeitsfilter ohne Verwirbelung der im Filter verbliebenen Trennschicht und Kationenaustauscher-Schicht läßt sich z. B. dadurch erreichen, daß man den Anionenaustauscher über eine in den Filter-Freiraum einmündende, für den Transport von Ionenaustauschern geeignete Zuleitung herabrieseln läßt.

Die Erfindung betrifft daher auch ein Gegenstromfilter zur Durchführung des beanspruchten Verfahrens. Dieses erfindungsgemäße Gegenstromfilter ist dadurch gekennzeichnet, daß es aus einem für Gegenstrom-Verfahren mit Aufstrom-Beladung üblichen I-Kammer-Ionenaustauschfilter besteht, das jedoch zusätzlich mit folgenden Vorrichtungen ausgerüstet ist :

a) einer Vorrichtung zum Entfernen der Anionenaustauscher-Schicht ohne Verwirbelung von angrenzender Trennschicht und darunterliegender Kationenaustauscherschicht aus dem Filter bestehend aus einem oder mehreren Heber(n), dessen (deren) einer Schenkel bis an die Grenzfläche Anionenaustauscher/Trennschicht hinabreicht (hinabreichen) oder aus einem oder mehreren senkrecht in den Anionenaustauscher bis an die Grenzfläche Anionenaustauscher/Trennschicht eingeführten Steigrohr(en) ;

b) einer Vorrichtung zur Rückführung des extern regenerierten Anionenaustauschers ohne Verwirbelung der im Filter verbliebenen Trennschicht und Kationenaustauscher-Schicht bestehend aus einer in den Filter-Freiraum einmündenden, für den Transport von Ionenaustauschern geeigneten Zuleitung.

Für Gegenstrom-Verfahren mit Beladung im Aufstrom üblicherweise verwendete I-Kammer-Ionenaustausch-Filter bestehen im allgemeinen aus einem mit verschließbaren Flüssigkeitszu- und -ableitungen versehenen zylindrischen, oben und unten mit Klöpperböden verschlossenen Gefäß, dessen zylindrischer Innenraum nach unten und oben durch eine flüssigkeitsdurchlässige Vorrichtung (z. B. Düsenboden) abgeschlossen ist.

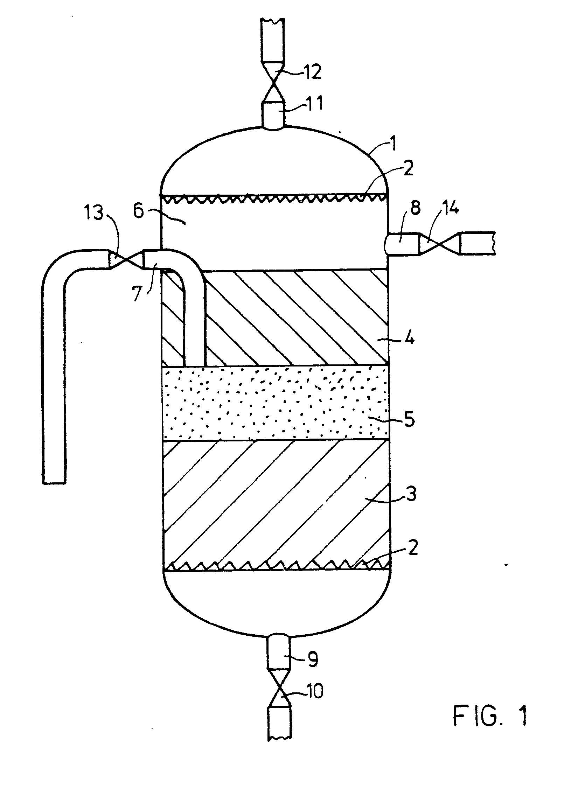

Das erfindungsgemäße Verfahren und das zu seiner Ausführung verwendete Gegenstrom-Filter seien anhand von Figur 1 erläutert :

Auf der unteren flüssigkeitsdurchlässigen Vorrichtung (2) der durch den zylindrischen Teil der Filtersäule (1) und die beiden flüssigkeitsdurchlässigen Vorrichtungen (2) gebildeten Kammer ruhen in getrennten, unmittelbar übereinander angeordneten Schichten Kationenaustauscher (3), Trennschicht (5) und Anionenaustauscher (4). Über dem Anionenaustauscher (4) befindet sich der Freiraum (6). Der Freiraum (6) wird nach oben durch die obere flüssigkeitsdurchlässige Vorrichtung (2) begrenzt.

In der Beladungsphase tritt die zu behandelnde Flüssigkeit durch die Zuleitung (9) in das Filter (1) ein. Die Leitungen (7) und (8) sind durch die Absperrorgane (13) und (14) geschlossen. Die behandelte Flüssigkeit verläßt durch Leitung (11) das Filter. Anschließend an die Beladung wird der Anionenaustauscher (4) bei geschlossenen Absperrorganen (10) und (14) und geöffnetem Absperrorgan (12) über Leitung (7) in einen zweiten, gesonderten Behälter abgehebert.

Bei dieser hydraulischen Förderung des Anionenaustauschers (4) aus dem Filter (1) tritt keine Verwirbelung der Trennschicht (5) und des Kationenaustauschers (3) ein.

Der Anionenaustauscher (4) wird in einem gesonderten Behälter für externe Regeneration in üblicher Weise mit verdünnter wäßriger Natronlauge regeneriert und anschließend gewaschen, bis der Waschwasser-Ablauf aus dem Anionenaustauscher nur noch die gewünschte Restleitfähigkeit aufweist.

Während oder nach der Regeneration des Anionenaustauschers (4) wird der im Arbeitsfilter (1) verbliebene Kationenaustauscher (3) in für Gegenstrom-Regenerationen üblicher Weise mit verdünnten wäßrigen Mineralsäuren, vorzugsweise verdünnter wäßriger Salzsäure, regeneriert. Die Regeneriersäure wird bei geschlossenen Absperrorganen (13) und (14) durch Leitung (11) eingespeist und nach Durchlaufen der Trennschicht (5) und der Kationenaustauscherschicht (3) durch Leitung (9) abgezogen. Das Auswaschen der Regeneriersäure aus Trennschicht und Kationenaustauscher erfolgt in gleicher Strömungsrichtung wie die Regeneration.

Sobald der Waschwasser-Ablauf aus dem Kationenaustauscher (3) nur noch die gewünschte Restleitfähigkeit aufweist, ist der Waschvorgang beendet und Absperrorgan (10) wird geschlossen.

Dann wird bei geschlossenen Absperrorganen (10) und (13) und geöffneten Absperrorganen (12) und (14) der Anionenaustauscher (4) durch Leitung (8) zurück in das Filter (1) gefördert. Bei dieser Rückförderung tritt wiederum keine Verwirbelung von Trennschicht (5) und Kationenaustauscherschicht (3) ein. Anschließend an den Aufbau der Anionenaustauscherschicht (4) auf Trennschicht (5) wird das Absperrorgan (14) wieder geschlossen, die Absperrorgane (10) und (12) werden geöffnet und der Beladungsvorgang beginnt von neuem.

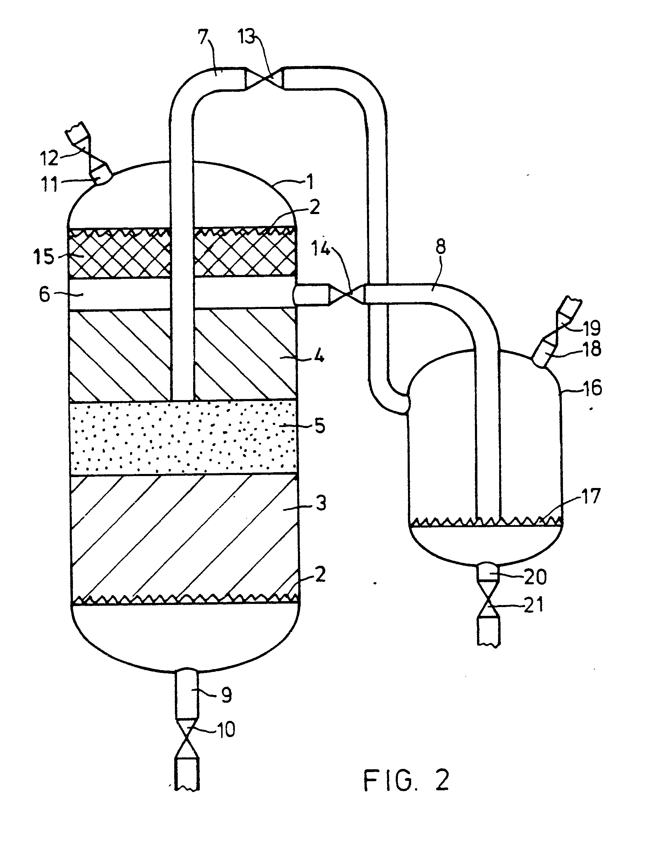

Eine besonders praxisnahe Ausführungsform des erfindungsgemäßen Verfahrens und Filters ist in Figur 2 dargestellt. In dieser Ausführungsform ist die obere flüssigkeitsdurchlässige Vorrichtung (2) des Filters (1) durch eine Schwimmschicht (15) aus Inertmaterial vor Verstopfungen geschützt.

Als Inertmaterial für die Schwimmschicht eignen sich Granulate organischer synthetischer Materialien, z. B. aus Polyethylen oder Polypropylen. Diese Inertmaterialien sollten eine Dichte aufweisen, die geringer ist als jede der Flüssigkeiten, mit denen sie in Berührung kommen, d. h. sie müssen auf den sie durchströmenden Flüssigkeiten schwimmen. Die Korngröße der Granulate sollte vorteilhaft etwa 0,2 bis 2,0 mm betragen.

In Figur 2 ist zusätzlich auch der für die externe Regenerierung des Anionenaustauschers erforderliche Regenerierbehälter (16) dargestellt. Nach beendeter Beladung wird der Anionenaustauscher (4) über das Steigrohr (7) bei geöffneten Absperrorganen (12), (13) und (21) und geschlossenen Absperrorganen (10), (14) und (19) in den Regenerierbehälter (16) gedrückt. Für eine störungsfreie Förderung ist es vorteilhaft, wenn der Anionenaustauscher (4), wie in Figur 2 gezeichnet, von oben in den Regenerierbehälter rieselt. Sobald sich der zu regenerierende Anionenaustauscher (4) im Regenerierbehälter (16) befindet, wird das Absperrorgan (13) geschlossen und bei geöffneten Absperrorganen (19) und (21) die Regenerierlauge durch Leitung (18) über den auf der flüssigkeitsdurchlässigen Vorrichtung (z. B. Düsenboden) (17) ruhenden Anionenaustauscher (4) filtriert und durch Leitung (20) abgezogen. Anschließend an die Regenerierung wird der Anionenaustauscher in gleicher Strömungsrichtung ausgewaschen. Nach beendetem Auswaschen wird das Absperrorgan (21) geschlossen.

Der regenerierte und ausgewaschene Anionenaustauscher (4) wird hydraulisch bei geöffneten Absperrorganen (12), (14) und (19) und geschlossenen Absperrorganen (10), (13) und (21) über Leitung (8) zurück in das Filter (1) gedrückt.

Beispiel 1

Es wird die in Figur 2 beschriebene Filteranordnung verwendet.

Das Filter (1) hat einen inneren Durchmesser von 300 mm ; seine zylindrische Höhe (= Kammerhöhe = Abstand zwischen unterem und oberem Düsenboden (2)) beträgt 2.200 mm. Das in die Anionenaustauscherschicht (4) eintauchende Ende des Steigrohres (7) befindet sich in der Grenzfläche Anionenaustauscher/Trennschicht. Die Höhe des Freiraumes (6) (zu Beginn der Beladung) beträgt 70 mm, die Höhe der Schwimmschicht (15) 200 mm.

Das Filter (1) ist gefüllt mit :

70 Litern starksaurem makroporösem Kationenaustauscher Höhe der Kationenaustauscherschicht (3) : 1 000 mm ; Spezifisches Gewicht : 1,21 g/ml ; Korngröße : 1,25-0,5 mm

56 Litern starkbasischem gelförmigem Anionenaustauscher Höhe der Anionenaustauscherschicht (4) : 800 mm ; Spezifisches Gewicht : 1,07 g/ml ; Korngröße : 1,12-0,4 mm
und

9 Litern Trennschicht-Harz (gemäß EP-A 2-0010265, Beispiel 12) Höhe der Trennschicht (5) : 130 mm ; Spezifisches Gewicht : 1,15 g/ml ; Korngröße : 0,5-0,7 mm.

Zum Beladen wird ein Leitungswasser mit folgendem Gehalt an Anionen und Kationen (Angaben in meq/l) verwendet :

| | |
|---|---|
| $Ca^{2-} + Mg^{2-}$ | 5,3 |
| $Na^- + K^-$ | 3,6 |
| $Cl^- + SO_4^{2-} + NO_3^-$ | 6,4 |
| $HCO_3^-$ | 2,5 |
| $CO_2$ (frei) | 0,07 |
| $SiO_2$ | 0,13 |

Der Regenerierbehälter (16) hat einen inneren Durchmesser von 300 mm und eine zylindrische Mantelhöhe von 1 600 mm. Der Abstand des senkrechten Endes der Leitung (8) vom unteren Düsenboden (17) beträgt 50 mm.

Nach jeder Beladung wird der Kationenaustauscher mit 10 kg 30 %iger Salzsäure (in Form einer 6 %igen wäßrigen Lösung) im Gegenstrom, der Anionenaustauscher mit 9 kg 50 %iger Natronlauge (in Form einer 4 %igen wäßrigen Lösung) extern regeneriert.

Das zu entsalzende Wasser wird mit einer Strömungsgeschwindigkeit von 1 200 l/h von unten nach oben durch das Filter (1) geleitet. Die durchschnittliche Leitfähigkeit des aus dem Filter (1) ausströmenden, entsalzten Wassers beträgt 2 bis 3 µS/cm, sein Kieselsäure-Gehalt weniger als 0,1 mg $SiO_2$/l. Die Beladung wird abgebrochen, sobald die Leitfähigkeit des entsalzten Wassers auf über 5 µS/cm ansteigt. Die Menge an entsalztem Wasser, die bis zu diesem Durchbruchswert erhalten wird, beträgt 4 535 l (Durchschnittswert aus sechs Arbeitszyklen).

Wendet man die Ionenaustauscher statt in dem erfindungsgemäßen Verfahren in dem in der DE-OS 16 42 848 beschriebenen Gegenstromverfahren an, so wird ein entsalztes Wasser erhalten, dessen durchschnittliche Leitfähigkeit nur 10 µS/cm beträgt ; die Menge an entsalztem Wasser, die bis zum Durchbruchwert von 20 µS/cm erhalten wird, beträgt nur 3 960 Liter.

Beispiel 2

Es wird wie in Beispiel 1 beschrieben gearbeitet, nur wird die Trennschicht (5) nicht aus 9 l Trennschichtharz sondern aus 9 l des verwendeten starkbasischen gelförmigen Anionenaustauschers aufgebaut. Diese 9 l Anionenaustauscher werden nach der Beladung nicht in den Regenerierbehälter (16) ausgetragen, sondern dienen als nicht mehr am Ionenaustausch teilnehmende Trennschicht (5).

Mit dem solchermaßen gefüllten Filter werden die gleichen Ergebnisse erhalten, wie in Beispiel 1. Es wird lediglich mehr Waschwasser zum Auswaschen der Regeneriersäure aus Trennschicht + Kationenaustauscher benötigt (700 l statt 280 l in Beispiel 1).

Beispiel 3

Es wird wie in Beispiel 1 beschrieben gearbeitet, nur wird zur Füllung des Filters (1) als starksaurer Kationenaustauscher ein gelförmiger starksaurer Kationenaustauscher (spezifisches Gewicht : 1,23 g/ml ; Korngröße 1,25-0,5 mm) und als Trennschicht (9 l) und als Anionenaustauscher (56 l) ein starkbasischer makroporöser Anionenaustauscher (spezifisches Gewicht : 1,09 g/ml ; Korngröße : 1,0-0,45 mm) verwendet.

Nach jeder Beladung wird der Kationenaustauscher mit 12 kg 30 %iger Salzsäure (in Form einer 6 %igen wäßrigen Lösung) im Gegenstrom, die 56 l Anionenaustauscher mit 9 kg 50 %iger Natronlauge (in Form einer 4 %igen wäßrigen Lösung) extern regeneriert.

Das zu entsalzende Wasser wird mit einer Strömungsgeschwindigkeit von 1 400 l/h von unten nach oben durch das Filter (1) geleitet. Die durchschnittliche Leitfähigkeit des das Filter verlassenden entsalzten Wassers beträgt 0,6 µS/cm, sein Kieselsäure-Gehalt 0,05 mg $SiO_2$/l. Die Beladung wird abgebrochen, sobald die Leitfähigkeit des entsalzten Wassers auf über 0,6 µS/cm ansteigt. Die Menge an entsalztem Wasser, die bis zu diesem Durchbruchwert durchgesetzt werden kann, beträgt 5 800 l (Durchschnittswert aus sechs Arbeitszyklen).

Beispiel 4

Es wird wie im Beispiel 3 gearbeitet, nur wird die Trennschicht (5) aus 9 l des in Beispiel 1 beschriebenen Trennschichtharzes aufgebaut.

Mit dem solchermaßen gefüllten Filter werden die gleichen Ergebnisse erhalten, wie in Beispiel 3. Nur der Waschwasser-Bedarf zum Auswaschen der Regeneriersäure aus dem Kationenaustauscher sinkt von den in Beispiel 3 erforderlichen 650 l auf 210 l.

Beispiel 5

Für die Beladung der Ionenaustauscher wird ein Abwasser verwendet, das einen Überschuß an freier Säure enthält ; insgesamt enthält das zu entsalzende Wasser folgende Mengen (in meq/l) an Kationen, Anionen, Kohlensäure und Kieselsäure :

| | |
|---|---|
| Kationen | 3,6 |
| $Cl^- + SO_4^{2-} + NO_3^-$ | 5,3 |
| $CO_2 + SiO_2$ | 0,3 |

Das Filter (1) der in Figur 2 beschriebenen Filteranordnung wird gefüllt mit :

49 Litern des in Beispiel 1 beschriebenen starksauren makroporösen Kationenaustauschers Höhe der Kationenaustauscher-Schicht (3) : 700 mm

86 Litern des in Beispiel 1 beschriebenen starkbasischen gelförmigen Anionenaustauschers ; von diesen 86 l dienen 77 l als Anionenaustauscher ; Höhe der Anionenaustauscher-Schicht (4) : 1 100 mm und 9 l als Trennschicht ; Höhe der Trennschicht (5) : 130 mm.

Das Ende des in den Anionenaustauscher eintauchenden Steigrohres (7) befindet sich in der Grenzfläche der Anionenaustauscherschicht (4)/Trennschicht (5).

Nach jeder Beladung wird der Kationenaustauscher mit 7 kg 30 %iger Salzsäure (in Form einer 6 %igen wäßrigen Lösung) im Gegenstrom, und die 77 l Anionenaustauscher mit 12,5 kg 50 %iger Natronlauge (in Form einer 4 %igen wäßrigen Lösung) extern regeneriert.

Das zu entsalzende Wasser wird mit einer Strömungsgeschwindigkeit von 1 000 l/h durch das Filter (1) geleitet. Die durchschnittliche Leitfähigkeit des das Filter verlassenden, entsalzten Wassers beträgt 5 µS/cm, sein Kieselsäure-Gehalt 0,1 mg $SiO_2$/l. Die Menge an entsalztem Wasser, die bis zum Durchbruchswert von 10 µS/cm durchgesetzt werden kann, beträgt 9 600 l Abwasser (Durchschnittswert aus sechs Arbeitszyklen).

Beispiel 6

Die Beladung der Ionenaustauscher wird mit dem in Beispiel 1 beschriebenen Wasser vorgenommen, jedoch ohne Bindung von Kohlensäure und Kieselsäure.

Das Filter (1) der in Figur 2 beschriebenen Filteranordnung wird in diesem Fall gefüllt mit :

80 Litern des in Beispiel 3 beschriebenen starksauren gelförmigen Kationenaustauschers Höhe der Kationenaustauscher-Schicht (3) : 1 150 mm

46 Litern eines schwachbasischen makroporösen Anionenaustauschers auf Acrylamid-Basis Höhe der Anionenaustauscher-Schicht (4) : 660 mm ; Spezifisches Gewicht : 1,05 g/ml ; Korngröße : 1,12-0,3 mm
und
9 Litern des in Beispiel 1 beschriebenen Trennschicht-Harzes.

Das Ende des in den Anionenaustauscher eintauchenden Steigrohres (7) befindet sich in der Grenzfläche Anionenaustauscher/Trennschicht.

Der Kationenaustauscher wird mit 16 kg 30 %iger Salzsäure (in Form einer 6 %igen wäßrigen Lösung) im Gegenstrom, der Anionenaustauscher mit 5,6 kg 50 %iger Natronlauge (in Form einer 4 %igen wäßrigen Lösung) extern regeneriert.

Das zu entsalzende Wasser wird mit einer Strömungsgeschwindigkeit von 950 l/h durch das Filter (1) geleitet. Die durchschnittliche Leitfähigkeit des das Filter verlassenden, entsalzten Wassers beträgt 20 µS/cm, sein Gehalt an Chlorid-Ionen 2 mg/l. Die Beladung wird abgebrochen, sobald die Leitfähigkeit des entsalzten Wassers auf über 25 µS/cm ansteigt. Die Menge an entsalztem Wasser, die bis zu diesem Durchbruchswert erhalten werden kann, beträgt 7 550 l (Durchschnittswert aus sechs Arbeitszyklen).

Da der Anionenaustauscher bei der Beladung um etwa 10 Vol-% quillt, der Kationenaustauscher dagegen um etwa 5 Vol.-% schrumpft, genügt ein Freiraum (6) von 70 mm.

**Patentansprüche**

1. Verfahren zur Behandlung von Flüssigkeiten in Ionenaustauschfiltern, die Kationenaustauscher und Anionenaustauscher in getrennten, übereinander angeordneten Schichten, den Kationenaustauscher als untere Schicht, den Anionenaustauscher als obere Schicht, enthalten und bei dem die Beladung der Ionenaustauscher im aufwärts gerichteten Flüssigkeitsstrom erfolgt und die erschöpften Ionenaustauscher getrennt regeneriert und ausgewaschen werden, dadurch gekennzeichnet, daß

a) Kationenaustauscher und Anionenaustauscher durch eine am Ionenaustausch nicht teilnehmende Schicht aus üblichen Trennschicht-Harzen oder aus dem im Verfahren verwendeten Anionenaustauscher in beladener Form voneinander getrennt sind und die Höhe dieser Schicht mindestens 30 mm größer ist als die Höhe des Freiraums im Filter zu Beginn des Beladungsvorgangs und mindestens 100 mm beträgt ;

b) nach beendeter Aufstrombeladung der Anionenaustauscher, ohne Trennschicht und Kationenaustauscher zu verwirbeln, aus dem Filter entfernt und in bekannter Weise in einem gesonderten Behälter extern regeneriert und ausgewaschen wird und der im Filter verbleibende, von der Trennschicht bedeckte Kationenaustauscher in bekannter Weise im Gegenstrom regeneriert und ausgewaschen wird ;

c) anschließend an die Regenerierung von Kationenaustauscher und Anionenaustauscher der Anionenaustauscher in das Filter zurückgefördert und die Anionenaustauscher-Schicht erneut aufgebaut wird, ohne Trennschicht und Kationenaustauscher-Schicht zu verwirbeln.

2. Verfahren nach Anspruch 1, dadurch gekennzeichnet, daß die Trennschicht-Harze in etwa die gleichen Korngrößen aufweisen, wie die feinste Siebfraktion des Kationenaustauschers und daß ihr spezifisches Gewicht mindestens 0,02 g/ml niedriger als das spezifische Gewicht des Kationenaustauschers und um mindestens 0,02 g/ml höher ist als das spezifische Gewicht des Anionenaustauschers ist.

3. Verfahren gemäß Anspruch 1, dadurch gekennzeichnet, daß die Korngröße des Kationenaustauschers über 0,3 mm liegt und sein spezifisches Gewicht mindestens um 0,05 g/ml größer ist als das spezifische Gewicht des Anionenaustauschers und die Korngröße des Anionenaustauschers unter 1,20 mm liegt.

4. Gegenstromfilter zur Durchführung des Verfahrens gemäß Ansprüchen 1, 2 oder 3, das aus einem für Gegenstrom-Verfahren mit Aufstrom-Beladung üblichen Ionenaustauschfilter besteht, dadurch gekennzeichnet, daß es zusätzlich mit folgenden Vorrichtungen ausgerüstet ist :

a) einer Vorrichtung zum Entfernen der Anionenaustauscher-Schicht ohne Verwirbelung von angrenzender Trennschicht und darunterliegender Kationenaustauscherschicht aus dem Filter bestehend aus einem oder mehreren Heber(n), dessen (deren) einer Schenkel bis an die Grenzfläche Anionenaustauscher/Trennschicht hinabreicht (hinabreichen) oder aus einem oder mehreren senkrecht in den Anionenaustauscher bis an die Grenzfläche Anionenaustauscher/ Trennschicht eingeführten Steigrohr(en) ;

b) einer Vorrichtung zur Rückführung des extern regenerierten Anionenaustauschers ohne Verwirbelung der im Filter verbliebenen Trennschicht und Kationenaustauscher-Schicht bestehend aus einer in den Filter-Freiraum ein mündenden, für den Transport von Ionenaustauschern geeigneten Zuleitung.

5. Gegenstromfilter gemäß Anspruch 4, dadurch gekennzeichnet, daß das für Gegenstrom-Verfahren mit Aufstrom-Beladung übliche Ionenaustauschfilter ein mit verschließbaren Flüssigkeitszu- und -ableitungen versehenes Ionenaustausch-Filter ist, dessen zylindrischer Innenraum nach unten und oben durch eine flüssigkeitsdurchlässige Vorrichtung abgeschlossen ist.

## Claims

1. Process for treating liquids in ion exchange filters which contain the cation exchanger and the anion exchanger in separate layers arranged one on top of the other, the cation exchanger being the lower layer and the anion exchanger being the upper layer, and in which the ion exchangers are loaded in an upwardly directed flow of liquid and the exhausted ion exchangers are regenerated and washed out separately, characterised in that

a) the cation exchanger and the anion exchanger are separated from one another by a layer which does not take part in the ion exchange and which consists of customary separating layer resins or of the anion exchanger used in the process, in loaded form, and the height of this layer is at least 30 mm greater than the height of the free space in the filter at the beginning of the loading process and is at least 100 mm ;

b) when the upward-flow loading has ended, the anion exchanger is removed from the filter, without whirling up the separating layer and the cation exchanger, and is regenerated and washed out externally in a known manner in a separate container, and the cation exchanger, which remains in the filter and is covered by the separating layer, is regenerated and washed out countercurrently in a known manner ; and

c) after the regeneration of the cation exchanger and the anion exchanger, the anion exchanger is passed back into the filter and the anion exchanger layer is built up again, without whirling up the separating layer and the cation exchanger layer.

2. Process according to Claim 1, characterised in that the separating layer resins have about the same particle sizes as the finest sieve fraction of the cation exchanger, and in that their specific weight is at least 0.02 g/ml lower than the specific weight of the cation exchanger and at least 0.02 g/ml higher than the specific weight of the anion exchanger.

3. Process according to Claim 1, characterised in that the particle size of the cation exchanger is greater than 0.3 mm and its specific weight is at least 0.05 g/ml greater than the specific weight of the anion exchanger, and the particle size of the anion exchanger is less than 1.20 mm.

4. Countercurrent filter for carrying out the process according to Claims 1, 2 or 3, which consists of an ion exchange filter which is customary for countercurrent processes with upward-flow loading, characterised in that it is additionally equipped with the following devices :

a) a device for removing the anion exchanger layer from the filter without whirling up the adjacent separating layer and the cation exchanger layer below this, consisting of one or more siphons, one leg of (each of) which extends down to the interface between the anion exchanger and the separating layer, or of one or more ascending tubes inserted vertically into the anion exchanger down to the interface between the anion exchanger and the separating layer ; and

b) a device for returning the externally regenerated anion exchanger without whirling up the separating layer and the cation exchanger layer which have remained in the filter, consisting of a feed line which is suitable for the transportation of ion exchangers and opens into the free space of the filter.

5. Countercurrent filter according to Claim 4, characterised in that the ion exchange filter customary for countercurrent processes with upward-flow loading is an ion exchange filter provided with closable liquid feed and discharge lines, the cylindrical interior space of which is closed off at the bottom and top by a device which is permeable to liquid.

## Revendications

1. Procédé de traitement de liquides dans des filtres d'échange ionique, qui contiennent des échangeurs cationiques et des échangeurs anioniques en couches séparées disposées l'une au-dessus de l'autre, l'échangeur cationique comme couche inférieure, l'échangeur anionique comme couche supérieure et dans lequel la charge des échangeurs ioniques est effectuée dans le courant de liquide dirigé vers le haut et l'échangeur ionique épuisé est régénéré et lavé séparément, caractérisé en ce que

a) l'échangeur cationique et l'échangeur anionique sont séparés l'un de l'autre par une couche, ne participant pas à l'échange ionique, de résines classiques pour couche de séparation ou de l'échangeur anionique utilisé dans le procédé, sous la forme chargée, et la hauteur de cette couche est plus grande d'au moins 30 mm que la hauteur de l'espace libre dans le filtre au début du processus de charge et s'élève à 100 mm au moins ;

b) lorsque la charge en courant ascendant est terminée, l'échangeur anionique, sans faire tourbillonner la couche de séparation et l'échangeur cationique, est retiré du filtre et est soumis à une régénération externe et lavée d'une manière connue dans un récipient séparé et l'échangeur cationique restant dans le filtre, recouvert de la couche de séparation, est régénéré et lavé d'une manière connue à contre-courant ;

c) après la régénération de l'échangeur cationique et de l'échangeur anionique, l'échangeur anionique est ramené dans le filtre et la couche d'échangeur anionique est rétablie sans faire tourbillonner la couche de séparation et la couche d'échangeur cationique.

2. Procédé suivant la revendication 1, caractérisé en ce que les résines de la couche de séparation présentent à peu près les mêmes grosseurs de grain que la fraction granulométrique la plus fine de l'échangeur cationique et en ce que leur masse volumique est inférieure d'au moins 0,02 g/ml à la masse volumique de l'échangeur cationique et supérieure d'au moins 0,02 g/ml à la masse volumique de l'échangeur anionique.

3. Procédé suivant la revendication 1, caractérisé en ce que la grosseur des grains de l'échangeur cationique est supérieure à 0,3 mm et sa masse volumique est supérieure d'au moins 0,05 g/ml à la masse volumique de l'échangeur anionique et la grosseur de grain de l'échangeur anionique est inférieure à 1,20 mm.

4. Filtre à contre-courant pour la mise en œuvre du procédé suivant les revendications 1, 2 ou 3, qui est constitué d'un filtre d'échange ionique classique pour un procédé à contre-courant avec charge en courant ascendant, caractérisé en ce qu'il est en outre équipé des dispositifs suivants :

a) un dispositif pour retirer du filtre la couche d'échangeur anionique sans tourbillonnement de la couche de séparation contiguë et de la couche sous-jacente d'échangeur cationique, constitué par un ou plusieurs siphons dont une branche atteint l'aire de délimitation entre l'échangeur anionique et la couche de séparation ou par un ou plusieurs tubes ascendants introduits verticalement dans l'échangeur anionique jusqu'à l'aire de délimitation entre l'échangeur anionique et la couche de séparation ;

b) un dispositif de recyclage de l'échangeur anionique après régénération externe, sans tourbillonnement de la couche de séparation restant dans le filtre et de la couche d'échangeur cationique, constitué par une conduite d'amenée appropriée au transport d'échangeurs ioniques, débouchant dans l'espace libre du filtre.

5. Filtre à contre-courant suivant la revendication 4, caractérisé en ce que le filtre d'échange ionique d'emploi classique pour un procédé à contre-courant avec charge en courant ascendant est un filtre d'échange ionique muni de conduites d'arrivée et de départ de liquide pouvant être obturées, dont l'espace intérieur cylindrique est fermé vers le bas et vers le haut par un dispositif perméable au liquide.

FIG. 1

FIG. 2